# EUROPEAN PATENT SPECIFICATION

(11) **EP 4 407 544 B1**
(45) Date of publication and mention of the grant of the patent: **18.03.2026**
(21) Application number: 22915466.1
(22) Date of filing: 17.10.2022
(51) Int. Cl.: B60C 11/24, B60C 13/00, G06Q 10/20, G01B 11/06, G01B 11/22

(54) **DETERIORATION CONDITION DETERMINATION METHOD AND DETERIORATION CONDITION DETERMINATION DEVICE**
VERFAHREN ZUR BESTIMMUNG DES VERSCHLEISSZUSTANDS UND VORRICHTUNG ZUR BESTIMMUNG DES VERSCHLEISSZUSTANDS
PROCÉDÉ DE DÉTERMINATION DE CONDITION DE DÉTÉRIORATION ET DISPOSITIF DE DÉTERMINATION DE CONDITION DE DÉTÉRIORATION

(30) Priority: 27.12.2021 JP 2021213461
(43) Date of publication of application: 31.07.2024
(73) Proprietor: BRIDGESTONE CORPORATION, Chuo-ku Tokyo 104-8340 (JP)
(72) Inventor: YAMAMOTO Taku, Tokyo 104-8340 (JP); MORIGUCHI Akira, Tokyo 104-8340 (JP)
(74) Representative: Marks & Clerk LLP
(86) International application number: PCT/JP2022/038640
(87) International publication number: WO 2023/127231

(56) References cited:
- JP-A- 2006 056 508
- JP-A- 2009 107 484
- JP-A- 2010 179 824
- JP-A- 2011 057 203
- JP-A- 2014 240 275
- JP-A- 2016 049 928
- JP-A- 2017 218 097
- JP-A- 2021 174 222
- KR-A- 20110 052 334
- US-A1- 2019 265 129
- US-A1- 2020 111 264
- US-A1- 2021 178 832
- US-B1- 7 557 694

## Description

### TECHNICAL FIELD

The present invention relates to a degradation state determination method and a degradation state determination apparatus.

### BACKGROUND

In recent years, with the development of the sharing economy in the transportation industry and the increasing use of retreaded tires, technology for understanding the degradation state of tires has been attracting attention. For example, Patent Literature (PTL) 1 discloses a tire whose usage limit is clearly indicated by a difference in the degree of discoloration between a character portion and a background portion when a display portion is exposed to light. KR2011-0052334A (D1) discloses a method for predicting the timing of tire replacement due to tire deterioration by using the sunlight-induced discoloration of SBR white rubber as an indicator (paragraph 0004). D1 includes a step of marking an indicator that is judged to be below a standard based on a tensile strength reduction rate of SBR white rubber according to the amount of sunlight exposure. The distinctive feature of D1 lies in the use of SBR white rubber, and its method is entirely different from that of the present invention. JP2010-179824A (D2) discloses a method for non-destructively determining the deterioration state of a tire (Abstract). D2 is characterized by attaching a tire deterioration judgment tool to the inner surface of the tire, wherein a redox indicator changes color in response to the amount of air permeation. The method of D2 is also completely different from that of the present invention.

### CITATION LIST

### Patent Literature

PTL 1: JP 2006-273260 A

### SUMMARY

### (Technical Problem)

However, the technology in PTL 1 displays a pre-printed expiration date, which is not accurate enough to be used as an objective index of the degradation state of the tire and of the rubber members that constitute the tire. Proposals that can suppress degradation based on the degradation state of a tire at the time of retreading are preferably made, but the lack of precision with conventional technology makes it difficult to provide appropriate proposals.

In light of such circumstances, it is an aim of the present invention to provide a degradation state determination method and a degradation state determination apparatus that can make appropriate proposals at the time of retreading.

### (Solution to Problem)

A degradation state determination method according to an embodiment of the present invention is a degradation state determination method for a degradation state determination apparatus to determine a degradation state of a tire mounted on a vehicle based on a color of an indicator attached to the tire, the degradation state determination method including determining the degradation state of the tire, using a degradation determination model that takes an amount of a degradation factor that causes the tire to degrade as an input and outputs an index of the degradation state of the tire, based on a color change database and a color component extracted from an image of the indicator attached to the tire, the color change database including data indicating a relationship between a change in color of the indicator and the amount of the degradation factor; and proposing, based on the determined degradation state of the tire, an option that is at least one of a method and a product that are selectable when retreading the tire.

A degradation state determination apparatus according to an embodiment of the present invention is a degradation state determination apparatus for determining a degradation state of a tire mounted on a vehicle based on a color of an indicator attached to the tire, the degradation state determination apparatus including a degradation determiner configured to determine the degradation state of the tire, using a degradation determination model that takes an amount of a degradation factor that causes the tire to degrade as an input and outputs an index of the degradation state of the tire, based on a color change database and a color component extracted from an image of the indicator attached to the tire, the color change database including data indicating a relationship between a change in color of the indicator and the amount of the degradation factor; and a proposal interface configured to propose, based on the determined degradation state of the tire, an option that is at least one of a method and a product that are selectable when retreading the tire.

### (Advantageous Effect)

According to the present invention, a degradation state determination method and a degradation state determination apparatus that can make appropriate proposals at the time of retreading can be provided.

### BRIEF DESCRIPTION OF THE DRAWINGS

In the accompanying drawings:
FIG. 1 is a diagram illustrating a configuration example of a degradation state determination apparatus according to an embodiment of the present invention;
FIG. 2 is a diagram illustrating a configuration example of a degradation state determination system that includes the degradation state determination apparatus in FIG. 1;
FIG. 3 is a diagram illustrating a configuration example of an indicator;
FIG. 4 is a flowchart illustrating an example of a first process included in a degradation state determination method according to an embodiment of the present invention;
FIG. 5 is a diagram illustrating a configuration example of a color change database;
FIG. 6 is a flowchart illustrating an example of a second process included in a degradation state determination method according to an embodiment of the present invention;
FIG. 7 is a diagram illustrating a configuration example of an indicator database;
FIG. 8 is a flowchart illustrating an example of a third process included in a degradation state determination method according to an embodiment of the present invention; and
FIG. 9 is a flowchart illustrating an example of a fourth process included in a degradation state determination method according to an embodiment of the present invention.

### DETAILED DESCRIPTION

A degradation state determination apparatus and a degradation state determination method according to embodiments of the present invention are described below with reference to the drawings. Parts in the drawings that are the same or correspond are allotted the same reference signs. In the explanation of the present embodiment, a description of identical or equivalent portions is omitted or simplified as appropriate.

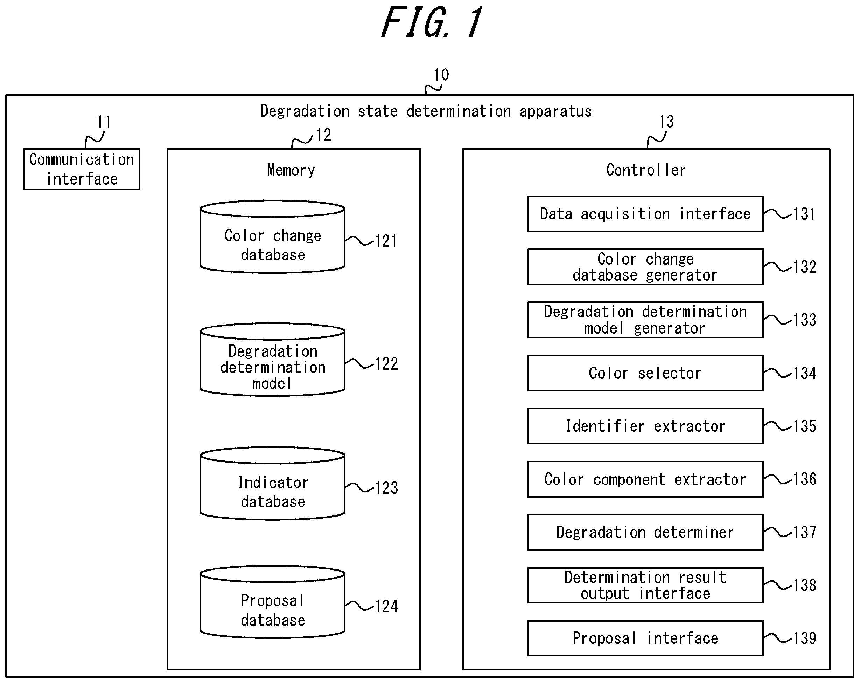

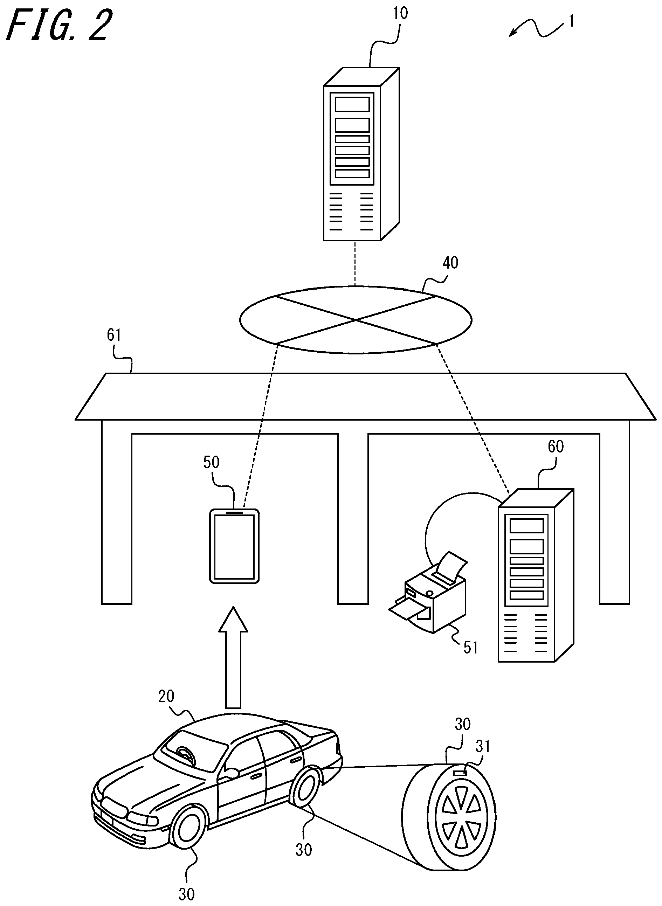

FIG. 1 is a diagram illustrating a configuration example of a degradation state determination apparatus 10 according to the present embodiment. FIG. 2 is a diagram illustrating a configuration example of a degradation state determination system 1 that includes the degradation state determination apparatus 10 in FIG. 1. The degradation state determination apparatus 10 is an apparatus for determining the degradation state of a target object that is the target of determination of the degradation state based on a color of an indicator 31 attached to the target object. In the present embodiment, the target object is a tire 30, but the target object is not limited to being the tire 30. In the present embodiment, the degradation state determination apparatus 10 proposes options such as a suitable vulcanization method for retreading the tire 30 based on the determined degradation state of the tire 30. Although the degradation of the tire 30 includes factors not apparent from the external appearance (such as hardening), the degradation can be determined with high accuracy by the degradation state determination apparatus 10. Retreading refers to the process of scraping off the tread rubber of the tire 30, affixing and vulcanizing new rubber, and then reusing the tire 30. A pre-cured tread (PCT) is sometimes used. The user is the user of a management facility 61 for the tire 30 where retreading and other operations are performed. In particular, the user is the driver or owner of the vehicle 20.

The degradation state determination apparatus 10 includes a communication interface 11, a memory 12, and a controller 13. The controller 13 includes a data acquisition interface 131, a color change database generator 132, a degradation determination model generator 133, a color selector 134, an identifier extractor 135, a color component extractor 136, a degradation determiner 137, a determination result output interface 138, and a proposal interface 139. In terms of hardware configuration, the degradation state determination apparatus 10 may, for example, be a computer such as a server. Details of the constituent elements of the degradation state determination apparatus 10 are described below.

The degradation state determination apparatus 10, together with at least one of a terminal apparatus 50, a printing apparatus 51, and a server 60 connected by a network 40, may form a degradation state determination system 1. The network 40 is, for example, the Internet, but may be a Local Area Network (LAN).

The terminal apparatus 50 is a general purpose mobile terminal such as a smartphone or tablet terminal but is not limited to such a mobile terminal, as long as the terminal apparatus 50 includes an imaging function and a display function. The terminal apparatus 50 is used by an administrator or user of the management facility 61 when, for example, the degradation state of the tire 30 is determined. The terminal apparatus 50 may use the imaging function to capture an image of the indicator 31 attached to the tire 30 and transmit the resulting image to the degradation state determination apparatus 10 via the network 40. The imaging function is, for example, realized by a camera included in the terminal apparatus 50. The terminal apparatus 50 may also acquire the degradation state determination result from the degradation state determination apparatus 10 via the network 40 and use the display function to display the result to the user. In the present embodiment, the terminal apparatus 50 may also display the content of the proposal from the degradation state determination apparatus 10 at the time the tire 30 is retreaded. The display function is, for example, realized by a display such as an LCD included in the terminal apparatus 50. Here, the terminal apparatus 50 may include a touch panel display integrated with a touch sensor that detects contact by the user and identifies the contact position.

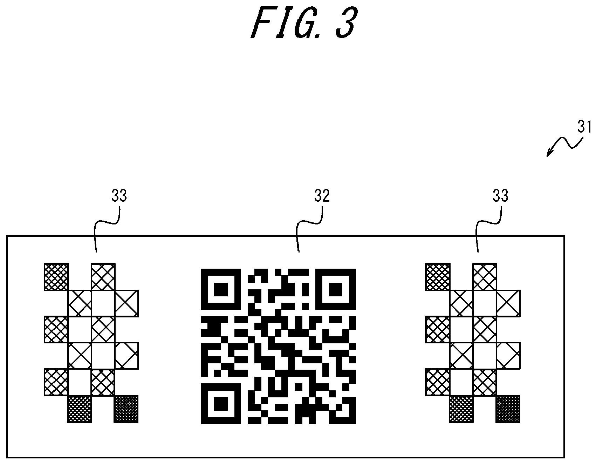

The printing apparatus 51 is, for example, a color inkjet printer but is not limited to a color inkjet printer, as long as the apparatus is capable of printing a plurality of color components. The printing apparatus 51 is used to print an identifier 32 and a color pattern 33 (see FIG. 3), described below, on a print medium such as paper or film (membranous resin), rubber, or the like when creating the indicator 31 to be attached to the tire 30. In the present embodiment, the printing apparatus 51 acquires print data from the degradation state determination apparatus 10 via the network 40 and the server 60 and performs printing to create the indicator 31. Here, the print data is indicator data including the identifier 32 and data on the color pattern 33.

The server 60 is, for example, a different computer than the degradation state determination apparatus 10. The server 60 is, for example, located in the management facility 61 and may manage data such as the retreading and repair history of the tires 30, in addition to relaying indicator data to the printing apparatus 51.

The management facility 61 is a facility for managing the tires 30 mounted on the vehicle 20. In the present embodiment, the tires 30 are repaired, replaced, retreaded, and the like at the management facility 61. Although the degradation state determination system 1 can execute the processing for degradation state determination regardless of the location of the vehicle 20, the processing for degradation state determination is described in the present embodiment as being performed while the vehicle 20 is visiting the management facility 61. The terminal apparatus 50, the printing apparatus 51, and the server 60 may be located away from the management facility 61, but unless otherwise noted, the terminal apparatus 50, the printing apparatus 51, and the server 60 are assumed to be in the management facility 61.

An overview of the degradation state determination method performed by the degradation state determination apparatus 10 is now described. Generally, it is known that printed materials printed by color inkjet printers or the like fade as the ink ages. The degree of fading varies depending on the color of the ink, even under the same environmental conditions. The degree of fading also differs depending on degradation factors in the environment (such as heat or ultraviolet light), even for the same print material. In the degradation state determination method according to the present embodiment, at the time of replacement of the tire 30, for example, an indicator 31 is attached to the new tire 30 (see FIG. 2). The degradation state determination apparatus 10 later acquires an image of the indicator 31 and calculates the amount of a degradation factor in the environment in which the tire 30 was used from the change in color of the indicator 31. The degradation state determination apparatus 10 then determines the degradation state of the tire 30 based on the calculated amount of the degradation factor. The degradation state determination apparatus 10 proposes, based on the determined degradation state of the tire 30, an option that is at least one of a method and a product that are selectable when retreading the tire 30.

FIG. 3 is a diagram illustrating a configuration of the indicator 31 in the present embodiment. The indicator 31 includes an identifier 32 and color patterns 33 printed on a print medium. The indicator 31 can be created inexpensively by printing with the printing apparatus 51. The identifier 32 is a two-dimensional code in the present embodiment but is not limited to a two-dimensional code, as long as the indicator 31 can be individually identified. The color pattern 33 is a pattern formed by applying a plurality of colors at different locations. The color pattern 33 is arranged in a checkerboard pattern in the present embodiment but is not limited to such an arrangement. The degradation state determination apparatus 10 determines the degradation state of the tire 30 based on the change in color of the color pattern 33. The selection of colors used in the color pattern 33 and other details are described below.

In the example in FIG. 2, the indicator 31 is provided on the sidewall of the tire 30, but the location where the indicator 31 is attached is not limited. As another example, the indicator 31 may be affixed to the surface of the inner liner of the tire 30 being retreaded. As yet another example, the indicator 31 may be attached to the bottom of a groove in the tread portion. A plurality of indicators 31 may be respectively attached to different locations on the tire 30. In this case, even if some of the indicators 31 fall off during travel by the vehicle 20 or become too dirty to be identified, the remaining indicators 31 can still be used to identify a change in color of the color pattern 33. Another advantage of providing a plurality of indicators 31 is that if a third party intentionally heats some of the indicators 31 to cause them to degrade, the remaining indicators 31 can be used to prevent index manipulation. Provision of a plurality of indicators 31 also enables independent estimation of the degree of degradation of each component in the tire 30. The robustness of the degradation state determination is thereby improved.

The degradation state determination system 1 is not limited to the configuration illustrated in FIG. 2. In the present embodiment, the printing apparatus 51 is connected to the network 40 via the server 60, but the printing apparatus 51 may be directly connectable to the network 40, for example. In such a case, the server 60 may be omitted, and the degradation state determination system 1 may be configured by the degradation state determination apparatus 10, the terminal apparatus 50, and the printing apparatus 51.

The constituent elements of the degradation state determination apparatus 10 are now described in detail. The communication interface 11 is configured to include one or more communication modules that connect to the network 40. The communication interface 11 may include a communication module corresponding to mobile communication standards, such as 4G (4^{th} Generation) and 5G (5^{th} Generation). The communication interface 11 may include a communication module corresponding to wired LAN standards (for example, 1000BASE-T). The communication interface 11 may include a communication module corresponding to wireless LAN standards (for example, IEEE802.11).

The memory 12 includes one or more memories. The memory can, for example, be a semiconductor memory, a magnetic memory, or an optical memory, but is not limited to these examples and can be any memory. The memory 12 is, for example, built into the degradation state determination apparatus 10, but the memory 12 can also be configured to be accessed externally by the degradation state determination apparatus 10 via any interface.

The memory 12 stores various data used in the various calculations performed by the controller 13. The memory 12 may also store the results and intermediate data of the various calculations performed by the controller 13.

In the present embodiment, the memory 12 includes a color change database 121, a degradation determination model 122, an indicator database 123, and a proposal database 124. The color change database 121 includes data indicating the relationship between the change in color of the indicator 31 and the amount of the degradation factor that causes the tire 30 to degrade. The degradation determination model 122 is a model for determining the degradation state of the tire 30 based on the amount of a degradation factor. The degradation determination model 122 may, for example, be generated by machine learning or the like and may be a mathematical model that takes the amount of the degradation factor as input and outputs a predicted service life. The indicator database 123 includes data that associates the identifier 32 of the indicator 31 with information on the color pattern 33. The information on the color pattern 33 includes the colors used, the color components that make up each color, and so on. The information on the color pattern 33 may also include the position of each color, the type of pattern for the color arrangement (such as a checkerboard pattern), and the like. The information on the color pattern 33 may also include the initial state of each color by gradation of each color component. Here, the initial state is the state of the indicator 31 at the time of creation. The proposal database 124 includes information on at least one (option) of a method and a product selectable when retreading the tire 30. In the proposal database 124, an option may be associated with a degradation factor that can be reduced by employing that option. The proposal database 124 may include information such as conditions for each region where retreading is possible, cumulative running distance (total life) of the tire 30, and the like. The proposal database 124 may also include information such as the amount of wear or the week of manufacture of the tire 30 for each user or vehicle 20. Furthermore, the proposal database 124 may include information from the user about the tire 30, such as the running distance, internal pressure filling period, whether the tire 30 is filled with nitrogen, and preferences for retreading options. Here, the internal pressure filling period is the period of time during which the tire 30 is fitted to the rim and filled to the internal pressure.

The controller 13 includes one or more processors. The processors can, for example, be a general purpose processor or dedicated processor specialized for specific processing, but these examples are not limiting, and any processor may be used. The controller 13 controls the overall operations of the degradation state determination apparatus 10.

Here, the degradation state determination apparatus 10 may have the following software configuration. One or more programs used to control the operations of the degradation state determination apparatus 10 are stored in the memory 12. When read by the processor of the controller 13, the programs stored in the memory 12 cause the controller 13 to function as the data acquisition interface 131, the color change database generator 132, the degradation determination model generator 133, the color selector 134, the identifier extractor 135, the color component extractor 136, the degradation determiner 137, the determination result output interface 138, and the proposal interface 139.

The data acquisition interface 131 acquires experimental data and images of the indicator 31, described below, via the network 40 and the communication interface 11.

The color change database generator 132 generates the color change database 121 and stores the generated color change database 121 in the memory 12. The color change database generator 132 can generate the color change database 121 by extracting information on colors and information on degradation factors from experimental data and generating data indicating the relationship between the change in color and the amount of a degradation factor.

The degradation determination model generator 133 generates the degradation determination model 122 and stores the generated degradation determination model 122 in the memory 12. The degradation determination model 122 is a model that takes an amount of a degradation factor as input and outputs an index of the degradation state of the tire 30. The index of the degradation state of the tire 30 is, for example, an index pertaining to durability, such as service life, or an index pertaining to driving performance, such as rolling resistance and wet grip, but these examples are not limiting. The degradation determination model generator 133 may acquire performance data, acquirable via the network 40 and the communication interface 11, indicating the actual degradation state of the tire 30 and may generate the degradation determination model 122 based on the performance data. The performance data may, for example, be data that is obtained from actual driving or testing of the vehicle 20 and indicates the degradation state of the tire 30 when a specific amount of a specific degradation factor is provided to the tire 30. As an example, the performance data may indicate the actual service life of the tire 30 when a new tire 30 of a specific type is exposed to an environment with a temperature of 20°C to 80°C and 20% to 80% oxygen for 10 to 10000 hours. The degradation determination model generator 133 may generate the degradation determination model 122 by machine learning using the performance data as training data.

The color selector 134 selects colors to be used for the indicator 31 so that the amount of the degradation factor can be identified in the degradation state determination performed by the degradation determiner 137. The color selector 134 then outputs the indicator data (print data) so that the color pattern 33 including the selected colors is printed by the printing apparatus 51.

The identifier extractor 135 extracts the identifier 32 from the image of the indicator 31 acquired by the data acquisition interface 131. The identifier 32 extracted by the identifier extractor 135 is used to identify the indicator 31 in the degradation state determination performed by the degradation determiner 137.

The color component extractor 136 extracts color components of the colors included in the color pattern 33 from the image of the indicator 31 acquired by the data acquisition interface 131. The color components extracted by the color component extractor 136 are used to identify the amount of the degradation factor in the degradation state determination performed by the degradation determiner 137. The color component extractor 136 may extract color component values in the RGB color space, HSV color space, and Lab color space at the position of each ink identified in the image and may execute a process to calculate an average value among color component values of the same color.

The degradation determiner 137 uses the degradation determination model 122 to determine the degradation state of the tire 30 based on the color change database 121 and the color components extracted from the image of the indicator 31 by the color component extractor 136. In detail, the degradation determiner 137 estimates (calculates) the amount of the degradation factor affected by the environment in which the tire 30 is used by comparing the color components extracted from the image of the indicator 31 with the data in the color change database 121. The degradation determiner 137 inputs the estimated amount of the degradation factor into the degradation determination model 122 and takes the outputted index of the degradation state of the tire 30 as the determination result. In the present embodiment, the determination result also includes the amount of the degradation factor calculated by the degradation determiner 137.

In the present embodiment, the degradation determiner 137 calculates the color components extracted from the image of the indicator 31 as a color component change by comparing the color components with the initial state of the indicator 31. The degradation determiner 137 can obtain the initial state of the color components of the indicator 31 from the indicator database 123. The degradation determiner 137 estimates the amount of the degradation factor by comparing the color component change with the data in the color change database 121. As a result of the color component change being obtained by comparison with the initial state in the present embodiment, the change in color can be accurately determined even if there are individual differences (such as printing variations) at the time the indicator 31 is created. The degradation state of the target object can therefore be determined with even higher accuracy.

The determination result output interface 138 outputs the determination result of the degradation state determination performed by the degradation determiner 137. The determination result outputted by the determination result output interface 138 is displayed on a display or the like of the terminal apparatus 50. For example, in a case in which the server 60 is configured to be connected to another display, the determination result may be displayed on the display connected to the server 60.

The proposal interface 139 proposes options for retreading the tire 30 based on the degradation state of the tire 30 as determined by the degradation determiner 137. The proposal interface 139 may, for example, select effective options from the proposal database 124 according to the major degradation of the tire 30 (such as degradation due to heat, oxygen, water, ultraviolet light, or ozone) and propose the options to the user. In a case in which it is determined that the tire 30 has degraded greatly and that travel would be difficult in the same region where the vehicle 20 is currently traveling even after retreading, the proposal interface 139 may propose selling to another region. The proposal interface 139 outputs the content of the proposal. The outputted content of the proposal may be displayed on a display of the terminal apparatus 50, a display connected to the server 60, or the like. Based on the determination result and the content of the proposal, the manager of the management facility 61, for example, can present the user with the degree of degradation of the tire 30, a suitable vulcanization method in the case of retreading, or the like. Even if the user is not familiar with the retreading method, for example, the user can select a suitable option for the tire 30 according to the content of the proposal displayed on the terminal apparatus 50. Here, the content of the proposal from the degradation determiner 137 may be outputted together with, or instead of, the determination result from the determination result output interface 138. The determination result and the content of the proposal may be displayed on a display connected to the server 60, and only the content of the proposal may be displayed on the display of the terminal apparatus 50.

The degradation state determination method performed by the degradation state determination apparatus 10 is described below with reference to flowcharts and the like. The degradation state determination method according to the present embodiment includes a first process, a second process, a third process, and a fourth process. The first process is for generating the color change database 121 and the degradation determination model 122 and is executed before the second, third, and fourth processes. The second process is for creating (printing by the printing apparatus 51) the indicator 31 to be attached to the tire 30 and is executed before the third and fourth processes. The third process is for acquiring an image of the indicator 31 attached to the tire 30 and determining the degradation state of the tire 30. The fourth process is executed after the third process and proposes options for retreading the tire 30 based on the determined degradation state of the tire 30.

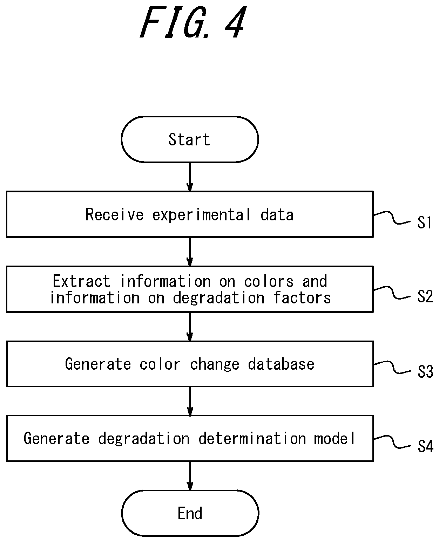

FIG. 4 is a flowchart illustrating an example of the first process included in the degradation state determination method.

The data acquisition interface 131 receives experimental data (step S1). The experimental data is data obtained by experimentally providing, to an experimental indicator created by the printing apparatus 51 in the same manner as the indicator 31, a degradation factor to cause the colors to fade. Similar to the color pattern 33 of the indicator 31, the experimental indicator has a pattern in which a plurality of colors is arranged. The experimental data includes information on the colors and information on the degradation factor. The experimental data may include a captured image of the experimental indicator and information on the degradation factor in the form of text information. The information on the degradation factor indicates the amount of the degradation factor provided experimentally. This may, for example, be information such as 20 hours of exposure to an environment with a temperature of 20°C and 20% oxygen.

The experimental data is transmitted to the degradation state determination apparatus 10 by, for example, the terminal apparatus 50. An application installed on the terminal apparatus 50 may associate the image of the experimental indicator with the information on the degradation factor and transmit the combination as the experimental data to the degradation state determination apparatus 10. Here, the terminal apparatus 50 may be at a different location (such as an experimental facility) than the management facility 61 and transmit the experimental data.

The color change database generator 132 extracts information on colors and information on degradation factors from the experimental data (step S2).

The color change database generator 132 generates data illustrating the relationship between the change in color and the amount of the degradation factor, and associates the data to generate the color change database 121 (step S3, color change database generation step).

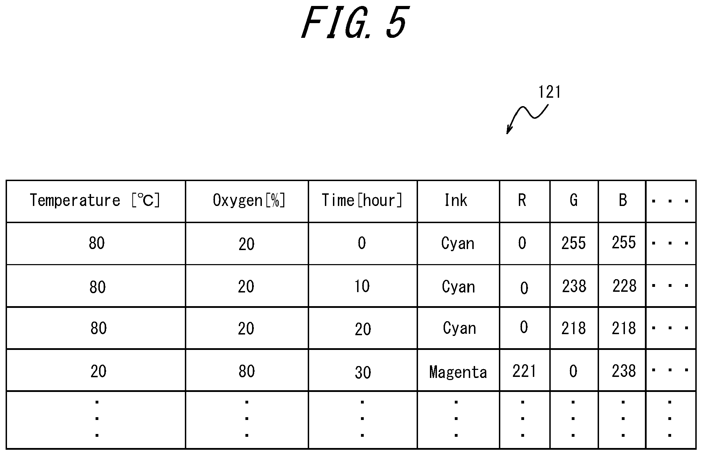

FIG. 5 is a diagram illustrating a configuration example of the color change database 121. In the example in FIG. 5, the color change database 121 is configured as a set of data that associates temperature (Temperature), oxygen (Oxygen), time exposed to conditions (Time), color or the ink used (Ink), and color components of the color used (R, G, B). The ink is, for example, indicated as cyan, magenta, yellow, or the like. The color components are indicated by a gradation from 0 to 255 for each of red (R), green (G), and blue (B).

In the example in FIG. 5, it is clear from the first and second columns of the color change database 121 that cyan, which had 255 G and 255 B as color components, fades to 238 G and 228 B when exposed to an environment with a temperature of 80°C and 20% oxygen for 10 hours. The color change database 121 thus indicates the relationship between changes in color and the amounts of degradation factors. When a change in color (fading) occurs in the color pattern 33 of the indicator 31, these relationships can be used to estimate the amount of the degradation factor that caused the fading by searching for data in the color change database 121 that indicates the same color component change.

The degradation determination model generator 133 generates the degradation determination model 122 (step S4). As described above, the degradation determination model 122 is a model that takes an amount of a degradation factor as input and outputs an index of the degradation state of the tire 30. Generation of the degradation determination model 122 in addition to the color change database 121 enables output of an index of the degradation state of the tire 30 based on the fading of the color pattern 33 of the indicator 31, using the estimated amount of the degradation factor as an intermediate parameter.

The items in the color change database 121 are not limited to the example in FIG. 5. For example, the degradation factors may include at least one of heat, oxygen, water, ultraviolet light, and ozone. By inclusion of such degradation factors that can be assumed in an outdoor environment, the accuracy of determining the degradation state of target objects used outdoors, including tires 30, can be improved.

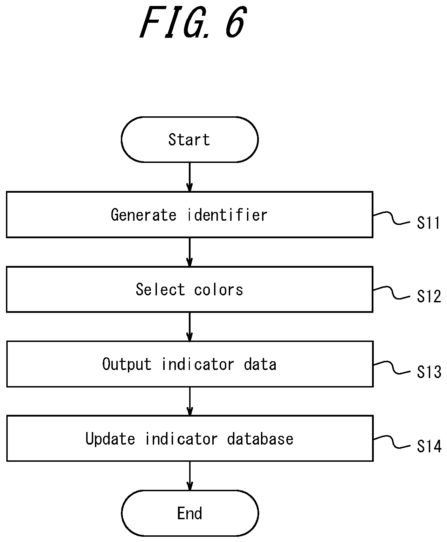

FIG. 6 is a flowchart illustrating an example of the second process included in the degradation state determination method. The second process is executed after the first process. The second process is, for example, executed when the tire 30 of the vehicle 20 is replaced with a new tire 30 at the management facility 61.

The color selector 134 generates an identifier 32 to be printed on the indicator 31 (step S11). The identifier 32 is used to associate the indicator 31 and the information on the color pattern 33 in the indicator database 123. The identifier 32 enables identification of each of the indicators 31, thus enabling the initial state to be recognized and individually managed. The color selector 134 may, for example, use a UUID (Universally Unique Identifier).

The color selector 134 selects the colors to be used for the indicator 31 so that the amount of the degradation factor can be identified (step S12, color selection step). As described above, the degree of fading depends on the degradation factor in the environment and the color of the ink. The color selector 134 may first select a color that varies significantly (color with high sensitivity) depending on the degradation factor assumed in the environment in which the tire 30 is used. For example, the color selector 134 may select a color (such as magenta) that fades significantly due to high temperature (such as 80°C) when high temperature is assumed as a degradation factor. The color selector 134 may further select a color for contrast. For example, the color selector 134 may select a color (such as yellow) that fades due to high temperature only under aerobic conditions as a contrast color. In a case in which no fading in yellow is observed whereas magenta is significantly faded during the degradation state determination, for example, the degradation factor can more accurately be identified as high temperature rather than oxygen. Here, the color selector 134 refers to the color change database 121 in selecting colors. The color selector 134 also specifies the color components of the selected colors based on the data in the color change database 121 so that the amount of the degradation factor can be accurately identified during the degradation state determination. The color selector 134 specifies, for example, magenta with R of 255 and B of 255. The color selector 134 also determines the arrangement of each color in the color pattern 33. The position at which each color is arranged may be managed by coordinates.

The color selector 134 selects, for inclusion in the indicator data, colors with color components that are less likely to fade for the sake of the control correction described below.

In the present embodiment, the color selector 134 selects a plurality of colors that can identify the same degradation factor and generates indicator data so that each of the colors that can identify the same degradation factor is applied to a different position in the indicator 31. By the color pattern 33 being configured in this way, even if a portion of the indicator 31 becomes unidentifiable due to dirt or the like after being attached to the tire 30, the degradation factor can still be identified from the remaining colors. As in the example in FIG. 3, the color selector 134 may generate the indicator data so that a plurality of color patterns 33 are in different positions.

The color selector 134 outputs the indicator data including the identifier 32 and the data on the color pattern 33 (step S13). The printing apparatus 51 acquires the indicator data from the degradation state determination apparatus 10 as print data via the network 40 and the server 60 and creates the indicator 31 by printing. The created indicator 31 is attached to the tire 30. In the present embodiment, an image of the indicator 31 created by the terminal apparatus 50 is captured, and the image is transmitted to the degradation state determination apparatus 10 as an indication of the initial state of the indicator 31.

The color selector 134 updates the indicator database 123 (step S14). In other words, information on the indicator data outputted by the color selector 134 is added to the indicator database 123. The information about the created indicator 31 is managed by the indicator database 123.

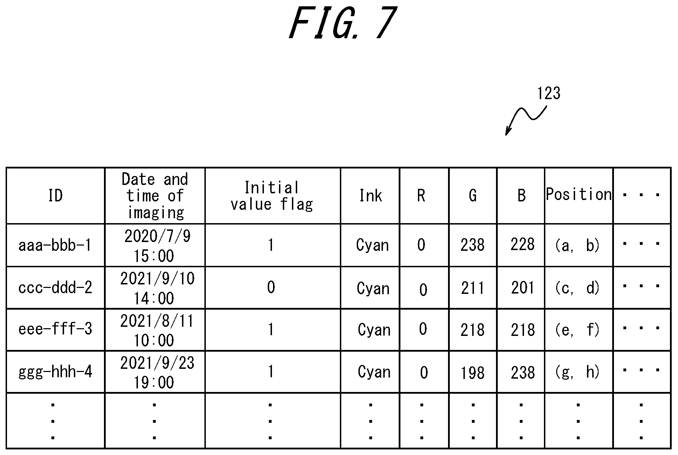

FIG. 7 is a diagram illustrating a configuration example of the indicator database 123. In the example in FIG. 7, the indicator database 123 is configured by a group of data in which the identifier 32 (ID), date and time of imaging, initial value flag, ink (Ink), color components (R, G, B), and color positions are associated. For a newly created indicator 31, information on the identifier 32 and color positions is extracted from the indicator data, and the data is added with the initial value flag set to "1". As described above, an image of the indicator 31 created by the terminal apparatus 50 is transmitted to the degradation state determination apparatus 10. The date and time of imaging, ink, and color components of this image are extracted and added to data on the newly created indicator 31. Here, the extraction of ink and color components may be performed by the color component extractor 136, and the color selector 134 may acquire the execution result of the color component extractor 136. In the indicator database 123, data with an initial value flag of "1" includes the initial state of the color of the indicator 31 having that identifier 32. Data with an initial value flag of "0" includes the color state after the indicator 31 having that identifier 32 is attached to the tire 30, and this data is added to the indicator database 123 by the third process.

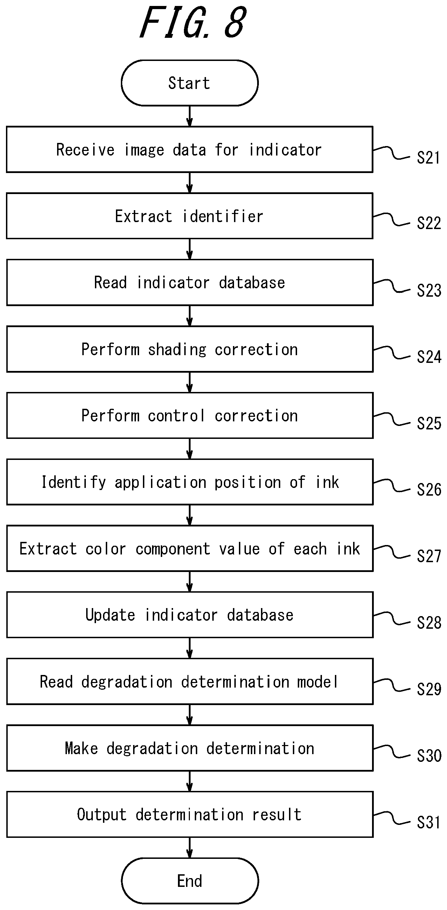

FIG. 8 is a flowchart illustrating an example of the third process included in the degradation state determination method. The third process is executed after the second process. The third process is, for example, executed at the timing when maintenance of the tires 30 is performed at the management facility 61. The third process may therefore be executed multiple times.

The data acquisition interface 131 receives the image data for the indicator 31 (step S21).

The identifier extractor 135 extracts the identifier 32 from the image data acquired by the data acquisition interface 131 (step S22).

The degradation determiner 137 identifies the indicator 31 based on the identifier 32 extracted by the identifier extractor 135. The degradation determiner 137 reads the indicator database 123 (step S23) and acquires data such as the initial state of the color of the identified indicator 31.

The color component extractor 136 performs shading correction (step S24) on the image data acquired by the data acquisition interface 131. Shading correction corrects for differences in light intensity within the color pattern 33 caused by the imaging environment.

The color component extractor 136 performs control correction (step S25). The control correction is performed to accurately measure the change from the initial state of the color of the indicator 31. The color component extractor 136 extracts a color component in the color pattern 33 that is less likely to fade (such as the G component of cyan) and adjusts the gradation to the initial state. This process allows the light intensity to be matched to the image of the indicator 31 at the time of creation.

The color component extractor 136 identifies the application positions of all inks (colors) that the color pattern 33 has based on the data in the indicator database 123 (step S26). For example, the positions are identified for cyan, magenta, yellow, and at least some mixture of these colors included in the color pattern 33.

The color component extractor 136 extracts the color component value of each ink whose position has been identified (step S27, color component extraction step). For example, in a case in which a plurality of color patterns 33 is included as in the example in FIG. 3, an average value may be used as the color component value for each ink. In a case in which a portion is dirty, the color component value of each ink may be extracted using only the color pattern 33 in the region that is not dirty. Although degradation determination may be performed using the extracted color component values of each ink themselves, degradation determination is performed in the present embodiment using the difference from the initial state. The color component extractor 136 therefore calculates the change from the initial state of the color component value of each ink using the data in the indicator database 123.

Here, the color component extractor 136 updates the indicator database 123 in the same manner as in step S14 of the second process (step S28). The configuration of the data added to the indicator database 123 is the same as in step S14 of the second process, except that the initial value flag is "0".

The degradation determiner 137 reads the color change database 121. The degradation determiner 137 also reads the degradation determination model 122 (step S29).

The degradation determiner 137 uses the degradation determination model 122 to make a degradation determination for the tire 30 based on the color change database 121 and the color components extracted from the image (step S30, degradation determination step).

First, the degradation determiner 137 extracts data corresponding to the change from the initial state of the color component values from the color change database 121 to estimate the amount of the degradation factor that the tire 30 has received from the environment. For example, in a case in which cyan, which had 253 for G and 253 for B as color components in the initial state, has faded (changed) to 236 for G and 226 for B, the degradation determiner 137 calculates 17 for G and 27 for B as the color component change. The degradation determiner 137 may extract data corresponding to such a color component change based on the color change database 121 to estimate that the amount of the degradation factor is "10 hours of exposure to an environment with a temperature of 80°C and 20% oxygen". The degradation determiner 137 may perform the estimation with known methods, such as regression analysis on the data constituting the color change database 121.

The degradation determiner 137 may also calculate the color component change for a plurality of color components that exhibit different changes for one degradation factor and may identify the amount of the degradation factor from the plurality of color component changes. For example, assume that the color change database 121 contains data indicating that the R of magenta changes from 255 to 220 when "exposed for 10 hours to an environment with a temperature of 80°C and 20% oxygen". By calculating and comparing the change in R of magenta, for example, in addition to cyan in the above example, the degradation determiner 137 can increase the accuracy of estimating the amount of the degradation factor and can consequently determine the degradation state of the tire 30 with higher accuracy.

The degradation determiner 137 inputs the amount of the degradation factor into the degradation determination model 122 to calculate an index of the degradation state of the tire 30. The degradation determiner 137 may calculate a plurality of indices of the degradation state of the tire 30, including the service life.

The determination result output interface 138 outputs the determination result by the degradation determiner 137 (step S31).

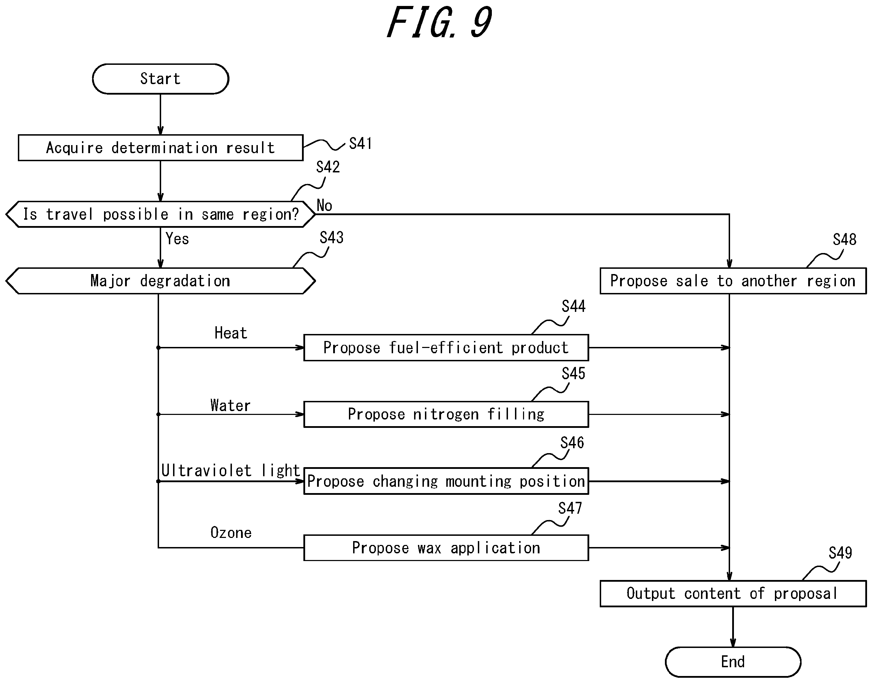

FIG. 9 is a flowchart illustrating an example of the fourth process included in the degradation state determination method. The fourth process is executed after the third process. The fourth process may be executed after some time has elapsed from the third process or may be executed immediately after the third process. The contents of the proposals are stored as templates in the memory 12, for example, and are selected by the proposal interface 139 according to conditions.

The proposal interface 139 acquires the determination result by the degradation determiner 137 (step S41).

Based on the acquired determination result, the proposal interface 139 determines whether the degradation state of the tire 30 is such that retreading would allow travel in the same region where the vehicle 20 is currently traveling (step S42). For example, in a case in which the region in which vehicle 20 is currently traveling is a region with high temperatures, it may be determined that the effect of thermal aging on the tire 30 is significant, and that travel in the same region would be difficult despite retreading. In a case of determining that travel in the same region is not possible (step S42: No), the proposal interface 139 proposes selling to another region (step S48). For example, in a case in which it is determined that the region in which the vehicle 20 is currently traveling is a region with high temperatures and that travel in the same region would be difficult due to the significant effect of thermal aging, a region with low temperatures is selected as the other region.

Here, the proposal interface 139 may make the determination in step S42 by acquiring from the proposal database 124 the conditions for each region where retreading is possible, the cumulative running distance of the tire 30, information on the week of manufacture of the tire 30, the running distance, and the internal pressure filling period. First, the proposal interface 139 determines that retreading is not possible in a case in which the actual running distance of the tire 30 exceeds the cumulative running distance of the tire 30 for which retreading is possible, which is determined according to the internal pressure filling period, or in a case in which the elapsed time since the week of manufacture of the tire 30 exceeds a predetermined number of years (such as 10 years). At this time, the proposal interface 139 may adjust at least one of the running distance and the predetermined number of years based on the conditions of each region. For example, the proposal interface 139 may reduce the cumulative running distance of the tire 30 that can be retreaded in a case in which the region in which the vehicle 20 is currently traveling is a region with high temperatures.

**In** a case of determining that travel in the same region is possible (step S42: Yes), the proposal interface 139 identifies the major degradation factor based on the acquired determination result (step S43). In the present embodiment, at least heat, oxygen, water, ultraviolet light, or ozone is distinguished as the major degradation, but other degradation factors may be included as well. The distinction of at least heat, oxygen, water, ultraviolet light, or ozone as the major degradation achieves the proposal of more appropriate retreading options for the travel environment of the vehicle 20 on which the tire 30 is mounted.

**In** a case in which the degree of thermal aging is significant, for example, the proposal interface 139 proposes the use of a fuel-efficient product in retreading (step S44). The fuel-efficient product may, for example, be a pre-cured tread with low rolling resistance. This can suppress heat buildup and thermal aging of the base tire whose period of use is extended by retreading. The proposal interface 139 may also propose a low-temperature vulcanization process, for example, together with or instead of a fuel-efficient product. The low-temperature vulcanization process can reduce thermal damage to the base tire during retreading.

In a case in which the degree of water degradation is significant, for example, the proposal interface 139 proposes nitrogen filling (step S45). By a reaction with the oxygen component of water, nitrogen filling can suppress the degradation of the base tire. The proposal interface 139 may also propose nitrogen filling in a case in which the degree of oxygen degradation is significant.

In a case in which the degree of ultraviolet light degradation is significant, for example, the proposal interface 139 proposes a change in the mounting position (step S46). For example, in a vehicle 20 having double wheels (double tires), the degradation caused by ultraviolet light can be suppressed by mounting as the inner wheel of the two wheels.

In a case in which the degree of ozone degradation is significant, for example, the proposal interface 139 proposes wax application (step S47). Application of wax to the sidewall of the base tire can suppress degradation caused by ozone.

Here, the proposal interface 139 may determine the content of the proposal in the proposal steps (steps S44 to S48) after acquiring information from the proposal database 124 on the amount of wear of the tire 30, whether the tire 30 is filled with nitrogen, and the user's preferences for retreading options. In the case of proposing a fuel-efficient product, for example, the proposal interface 139 may further select and propose a product with optimal wear resistance based on the information on the amount of wear of the tire 30. The proposal interface 139 may, for example, propose nitrogen filling only in a case in which the tire 30 has not been filled with nitrogen in the past. In the case of proposing a fuel-efficient product, for example, the proposal interface 139 may select and propose a product that is priced as desired based on information from the user about a desired price range. In this way, the proposal step may further propose options based on at least one of information on the amount of wear of the tire 30 and information from the user, thereby further tailoring the proposals to the travel conditions of the vehicle 20 and the wishes of the user.

The proposal interface 139 outputs the content of the proposal in the same manner as the determination result output interface 138 (step S49). The outputted content of the proposal may be displayed on a display of the terminal apparatus 50, a display connected to the server 60, or the like.

As described above, the degradation state determination method and degradation state determination apparatus 10 according to the present embodiment can make appropriate proposals at the time of retreading based on an index of the degradation state of the tire 30 through the above configuration. In conventional technology, the accuracy is insufficient for use as an objective index of the degradation state of the tire, and a determination as to whether retreading is possible is therefore made solely on the basis of information such as the amount of wear of the tire 30, the week of manufacture, and information from the user on the running distance. A determination based solely on such information could result in the discarding of tires whose useful life could be extended by retreading, or in the failure to select the most appropriate option. The degradation state determination method and degradation state determination apparatus 10 according to the present embodiment can determine the degradation state of the tire 30 in detail based on the color of the indicator 31, properly determine whether retreading is possible based on the determination result, and select the most appropriate option.

Although embodiments of the present invention have been described based on the drawings and examples, it is to be noted that various changes or modifications will be apparent to those skilled in the art based on the present invention. Therefore, such changes or modifications are to be understood as included within the scope of the present invention. For example, the functions and the like included in the components, steps, and the like may be reordered in any logically consistent way, and components, steps, and the like may be combined into one or divided. An embodiment of the present invention can also be realized as a program to be executed by a processor provided in an apparatus or as a storage medium with a program recorded thereon. Such embodiments are also to be understood as included within the scope of the present invention.

For example, in the above embodiment, the degradation state determination apparatus 10 includes the proposal interface 139 and the proposal database 124. As another configuration example, the server 60 may include the proposal interface 139 and the proposal database 124. In this case, the server 60 may execute the aforementioned proposals regarding retreading based on the degradation determination result for the tire 30 from the degradation state determination apparatus 10. As another configuration example, the terminal apparatus 50 may include the proposal interface 139 and the proposal database 124. The proposal interface 139 may be realized by an application installed on the terminal apparatus 50. In this case, the terminal apparatus 50 may execute the aforementioned proposals regarding retreading based on the degradation determination result for the tire 30 from the degradation state determination apparatus 10.

The image of the indicator 31 used to extract color components in the color component extraction step of the above embodiment is not limited to an image captured by irradiating visible light. For example, the image data for the indicator 31 may be an image captured by irradiating non-visible light such as ultraviolet (UV) light. In an image captured by irradiating non-visible light, the color change (sensitivity) to a specific degradation factor may be greater than in the case of irradiating visible light. Therefore, an image captured by irradiating with non-visible light may be used in cases in which the effect of a specific degradation factor is to be examined in detail.

### REFERENCE SIGNS LIST

- 1: Degradation state determination system
- 10: Degradation state determination apparatus
- 11: Communication interface
- 12: Memory
- 13: Controller
- 20: Vehicle
- 30: Tire
- 31: Indicator
- 32: Identifier
- 33: Color pattern
- 40: Network
- 50: Terminal apparatus
- 51: Printing apparatus
- 60: Server
- 61: Management facility
- 121: Color change database
- 122: Degradation determination model
- 123: Indicator database
- 124: Proposal database
- 131: Data acquisition interface
- 132: Color change database generator
- 133: Degradation determination model generator
- 134: Color selector
- 135: Identifier extractor
- 136: Color component extractor
- 137: Degradation determiner
- 138: Determination result output interface
- 139: Proposal interface

## Claims

1. A degradation state determination method for a degradation state determination apparatus (10) to determine a degradation state of a tire (30) mounted on a vehicle (20) based on a color of an indicator (31) attached to the tire (30), **characterised in that**
the degradation state determination method comprises:
determining the degradation state of the tire (30), using a degradation determination model (122) that takes an amount of a degradation factor that causes the tire (30) to degrade as an input and outputs an index of the degradation state of the tire (30), based on a color change database (121) and a color component extracted from an image of the indicator (31) attached to the tire (30), the color change database (121) including data indicating a relationship between a change in color of the indicator (31) and the amount of the degradation factor; and
proposing, based on the determined degradation state of the tire (30), an option that is at least one of a method and a product that are selectable when retreading the tire (30).

2. The degradation state determination method according to claim 1, wherein the proposing includes proposing the option according to a major degradation of the tire (30) and distinguishes at least heat, oxygen, water, ultraviolet light, or ozone as the major degradation.

3. The degradation state determination method according to claim 1 or 2, wherein the indicator (31) includes a pattern in which a plurality of colors is arranged.

4. The degradation state determination method according to any one of claims 1 to 3, wherein the proposing further includes proposing the option based on at least one of information on an amount of wear of the tire (30) and information from a user.

5. A degradation state determination apparatus (10) for determining a degradation state of a tire (30) mounted on a vehicle (20) based on a color of an indicator (31) attached to the tire (30),
**characterised in that**
the degradation state determination apparatus (10) comprises:
a degradation determiner (137) configured to determine the degradation state of the tire (30), using a degradation determination model (122) that takes an amount of a degradation factor that causes the tire (30) to degrade as an input and outputs an index of the degradation state of the tire (30), based on a color change database (121) and a color component extracted from an image of the indicator (31) attached to the tire (30), the color change database (121) including data indicating a relationship between a change in color of the indicator (31) and the amount of the degradation factor; and
a proposal interface (139) configured to propose, based on the determined degradation state of the tire (30), an option that is at least one of a method and a product that are selectable when retreading the tire (30).

## Patentansprüche

1. Verschlechterungszustandsbestimmungsverfahren für eine Verschlechterungszustandsbestimmenseinrichtung (10) zum Bestimmen eines Verschlechterungszustands eines Reifens (30), der auf einem Fahrzeug (20) montiert ist, basierend auf der Farbe eines Indikators (31), der an dem Reifen (30) angebracht ist,
**dadurch gekennzeichnet, dass**
das Verschlechterungszustandsbestimmungsverfahren Folgendes umfasst:
Bestimmen des Verschlechterungszustands des Reifens (30) unter Verwendung eines Verschlechterungsbestimmungsmodells (122), das eine Menge eines Verschlechterungsfaktors, der die Verschlechterung des Reifens (30) verursacht, als eine Eingabe nimmt, und einen Index des Verschlechterungszustands des Reifens (30) ausgibt, der auf einer Farbänderungsdatenbank (121) und einer Farbkomponente basiert, die aus einem Bild des Indikators (31), der an dem Reifen (30) angebracht ist, extrahiert wird, wobei die Farbänderungsdatenbank (121) Daten einschließt, die eine Beziehung zwischen einer Farbänderung des Indikators (31) und der Menge des Verschlechterungsfaktors angeben; und
Vorschlagen, basierend auf dem bestimmten Verschlechterungszustand des Reifens (30), einer Option, die mindestens eines von einem Verfahren und einem Produkt ist, die bei der Runderneuerung des Reifens (30) auswählbar sind.

2. Verschlechterungszustandsbestimmungsverfahren nach Anspruch 1, wobei das Vorschlagen das Vorschlagen der Optionen gemäß einer wesentlichen Verschlechterung des Reifens (30) einschließt und mindestens Hitze, Sauerstoff, Wasser, ultraviolettes Licht oder Ozon als die wesentliche Verschlechterung unterscheidet.

3. Verschlechterungszustandsbestimmungsverfahren nach Anspruch 1 oder 2, wobei der Indikator (31) ein Muster einschließt, in dem eine Vielzahl von Farben eingerichtet ist.

4. Verschlechterungszustandsbestimmungsverfahren nach einem der Ansprüche 1 bis 3, wobei das Vorschlagen weiter das Vorschlagen der Option basierend auf mindestens einer Information über eine Verschleißmenge des Reifens (30) und Information von einem Benutzer einschließt.

5. Verschlechterungszustandsbestimmungseinrichtung (10) zum Bestimmen eines Verschlechterungzustands eines Reifens (30), der auf einem Fahrzeug (20) montiert ist, basierend auf einer Farbe eines Indikators (31), der an dem Reifen (30) angebracht ist,
**dadurch gekennzeichnet, dass**
die Verschlechterungszustandsbestimmungseinrichtung (10) Folgendes umfasst:
einen Verschlechterungsbestimmer (137), der dazu konfiguriert ist, den Verschlechterungszustand des Reifens (30) unter Verwendung eines Verschlechterungsbestimmungsmodells (122) zu bestimmen, das eine Menge eines Verschlechterungsfaktors, der das Verschlechtern des Reifens (30) verursacht, als eine Eingabe nimmt, und einen Index des Verschlechterungszustands des Reifens (30) ausgibt, der auf einer Farbänderungsdatenbank (121) und einer Farbkomponente basiert, die aus einem Bild des Indikators (31), der an dem Reifen (30) angebracht ist, extrahiert wird, wobei die Farbänderungsdatenbank (121) Daten einschließt, die eine Beziehung zwischen einer Farbänderung des Indikators (31) und der Menge des Verschlechterungsfaktors angeben; und
eine Vorschlagsschnittstelle (139), die dazu konfiguriert ist, basierend auf dem bestimmten Verschlechterungszustand des Reifens (30) eine Option vorzuschlagen, die mindestens eines von einem Verfahren und einem Produkt ist, die bei der Runderneuerung des Reifens (30) auswählbar sind.

## Revendications

1. Procédé de détermination de l'état de dégradation d'un appareil de détermination de l'état de dégradation (10) pour déterminer l'état de dégradation d'un pneu (30) monté sur un véhicule (20) en fonction de la couleur d'un indicateur (31) fixé au pneu (30),
**caractérisé en ce que**
le procédé de détermination de l'état de dégradation comprend :
la détermination de l'état de dégradation du pneu (30), en utilisant un modèle de détermination de la dégradation (122) qui prend en entrée une quantité d'un facteur de dégradation qui provoque la dégradation du pneu (30) et qui produit en sortie un indice de l'état de dégradation du pneu (30), en fonction d'une base de données de changement de couleur (121) et d'une composante de couleur extraite d'une image de l'indicateur (31) fixé au pneu (30), la base de données de changement de couleur (121) incluant des données indiquant une relation entre un changement de couleur de l'indicateur (31) et la quantité du facteur de dégradation ; et
la proposition, en fonction de l'état de dégradation déterminé du pneu (30), d'une option qui est au moins l'une parmi un procédé et un produit qui peuvent être choisis lors du rechapage du pneu (30).

2. Procédé de détermination de l'état de dégradation selon la revendication 1, dans laquelle la proposition inclut la proposition de l'option selon la dégradation majeure du pneu (30) et distingue au moins la chaleur, l'oxygène, l'eau, la lumière ultraviolette ou l'ozone comme dégradation majeure.

3. Procédé de détermination de l'état de dégradation selon la revendication 1 ou 2, dans lequel l'indicateur (31) inclut un motif dans lequel une pluralité de couleurs est agencée.

4. Procédé de détermination de l'état de dégradation selon l'une quelconque des revendications 1 à 3, dans laquelle la proposition inclut en outre la proposition de l'option en fonction d'au moins l'une parmi une information sur le degré d'usure du pneu (30) et une information provenant d'un utilisateur.

5. Appareil de détermination de l'état de dégradation (10) pour déterminer l'état de dégradation d'un pneu (30) monté sur un véhicule (20) en fonction de la couleur d'un indicateur (31) fixé au pneu (30),
**caractérisé en ce que**
l'appareil de détermination de l'état de dégradation (10) comprend :
un dispositif de détermination de dégradation (137) configuré pour déterminer l'état de dégradation du pneu (30), en utilisant un modèle de détermination de la dégradation (122) qui prend en entrée une quantité d'un facteur de dégradation qui provoque la dégradation du pneu (30) et produit en sortie un indice de l'état de dégradation du pneu (30), en fonction d'une base de données de changement de couleur (121) et d'une composante de couleur extraite d'une image de l'indicateur (31) fixé au pneu (30), la base de données de changement de couleur (121) incluant des données indiquant une relation entre un changement de couleur de l'indicateur (31) et la quantité du facteur de dégradation ; et
une interface de proposition (139) configurée pour proposer, en fonction de l'état de dégradation déterminé du pneu (30), une option qui est au moins l'une parmi un procédé et un produit pouvant être choisis lors du rechapage du pneu (30).
